# FASCICULE DE BREVET EUROPEEN

(11) **EP 0 424 189 B1**
(45) Date de publication et mention de la délivrance du brevet: **04.01.1995**
(21) Numéro de dépôt: 90402552.5
(22) Date de dépôt: 17.09.1990
(51) Int. Cl.: G06F 17/50

(54) **Système informatique pour reconstituer le schéma d'au moins une partie du câblage électrique d'une installation**
Computersystem zur Wiederherstellung eines Schemas wenigstens eines Teils der elektrischen Verdrahtung einer Anlage
Computer system for reconstructing the diagram of at least one part of the electrical wiring of an installation

(30) Priorité: 21.09.1989 FR 8912425
(43) Date de publication de la demande: 24.04.1991
(73) Titulaire: AEROSPATIALE Société Nationale Industrielle, 75781 Paris Cédex 16 (FR)
(72) Inventeur: Granier, Pierre, F-31770 Colomiers (FR); de Faget de Casteljau, Eric, F-31200 Toulouse (FR); Mondon, Lionel, F-31500 Toulouse (FR)
(74) Mandataire: Bonnetat, Christian

(56) Documents cités:
- EP-A- 0 231 119
- EP-A- 0 283 267
- EP-A- 0 304 865
- COMPUTER AND GRAPHICS, vol. 8, no. 3, 1984, pages 231-236, Elmsford, NY, US; A.L. TESHIMA: "Application of CAD in aircraft wiring diagrams in the Brazilianaeronautical industry"

## Description

La présente invention concerne un système informatique pour reconstituer le schéma d'au moins une partie du câblage électrique d'une installation.

Quoique non exclusivement, la présente invention s'applique plus particulièrement à un tel système embarqué à bord d'un aéronef.

En effet, jusqu'à présent, les plans du câblage électrique d'un aéronef sont disponibles pour les compagnies aériennes sur un support en papier ou sur des microfilms. Ces documents présentent un intérêt évident pour la maintenance et le dépannage de l'aéronef.

Pour décrire le câblage électrique de l'aéronef, on utilise à ce jour deux formes différentes :
- un schéma descriptif : chaque dessin représente une partie très limitée du câblage de l'aéronef avec les références des câbles, des prises ainsi que des équipements connectés ;
- des listes de câbles et d'équipements : ces listes, qui sont triées selon différents critères afin d'en faciliter la recherche, contiennent les identifications des câbles et de leurs extrémités, ainsi que des équipements et de leurs extrémités.

Dans l'un et l'autre cas, le problème essentiel est celui de l'encombrement résultant du stockage de telles informations, que ce soit sous forme de schémas ou de listes.

La présente invention a pour but d'éviter cet inconvénient, et concerne un système informatique qui permet de réduire, de façon significative, un tel "encombrement", tout en conservant le niveau d'information fourni par les schémas actuellement existants.

A cet effet, le système informatique pour reconstituer le schéma d'au moins une partie du câblage électrique d'une installation, comprenant :
a) une première unité de traitement d'information comportant :
   . des premiers moyens de mémoire, dans lesquels sont emmagasinées des informations relatives à l'ensemble de la structure du câblage électrique de l'installation ; et
   . des moyens de recherche, dans lesdits premiers moyens de mémoire, des informations spécifiques à une partie déterminée dudit câblage ;
b) des moyens, reliés à ladite première unité, pour l'introduction de données d'identification de ladite partie déterminée du câblage, dans lesdits moyens de recherche ;
c) une seconde unité de traitement d'information, reliée à ladite première unité, comportant :
   . des seconds moyens de mémoire, dans lesquels sont emmagasinées des informations relatives à la représentation graphique des éléments du câblage ; et
   . des moyens pour engendrer, à partir d'une structure logique de ladite partie déterminée du câblage, une image représentative de ladite partie du câblage en fonction des informations contenues dans lesdits seconds moyens de mémoire ; et
d) des moyens d'affichage de ladite image,
   est remarquable, selon l'invention, en ce que :
   - lesdits premiers moyens de mémoire comportent une première mémoire contenant la description de tous les éléments du câblage électrique de l'installation, et une deuxième mémoire contenant les connexions internes propres à des éléments particuliers du câblage ;
   - lesdits seconds moyens de mémoire comportent une troisième mémoire contenant les informations graphiques relatives à la structure interne d'éléments particuliers du câblage, et une quatrième mémoire contenant les symboles graphiques propres aux différents éléments du câblage ; et
   - ladite première unité comporte des moyens pour élaborer, à partir desdites informations spécifiques délivrées par lesdits moyens de recherche, la structure logique des connexions entre les éléments de ladite partie déterminée du câblage.

Ainsi, le remplacement du stockage de données graphiques (schémas de câblage) par le système informatique selon l'invention permettant de reconstituer un schéma de câblage électrique, aura pour conséquence un gain important en ce qui concerne l'espace mémoire disponible. Le stockage de graphiques nécessite, en effet, une taille mémoire nettement supérieure au stockage d'une liste qui contient des données alphanumériques.

On remarquera que le brevet EP-A-0 304 865 décrit un système destiné à dessiner des réseaux d'intercommunication, du type décrit ci-dessus. Cependant, ce brevet ne concerne que les commmunications entre éléments et ne prend pas en compte la structure desdits éléments. Aussi, le système décrit dans ce brevet antérieur ne saurait résoudre le problème résolu par la présente invention.

Avantageusement, les moyens de génération d'image comprennent des moyens de représentation graphique des éléments de ladite partie déterminée du câblage, reliés à des moyens pour positionner lesdits éléments sur le schéma et y ajouter la description des câbles de connexion, pour fournir ainsi un fichier descriptif du schéma qui est transmis à un dispositif produisant, à partir des informations contenues dans le fichier, une image directement affichable sur lesdits moyens d'affichage.

De plus, le système peut comprendre une interface entre, d'une part, lesdits moyens d'introduction de données et ladite première unité de traitement d'information, et, d'autre part, ladite seconde unité de traitement d'information et lesdits moyens d'affichage.

De préférence, lesdits moyens d'introduction de données sont constitués par un clavier de commande et/ou lesdits moyens d'affichage sont constitués par un écran de visualisation et/ou une imprimante.

Les figures du dessin annexé feront bien comprendre comment l'invention peut être réalisée. Sur ces figures, des références identiques désignent des éléments semblables.

La figure 1 est un schéma synoptique fonctionnel du système de l'invention.

La figure 2 illustre, schématiquement, une réalisation préférée du système de la figure 1.

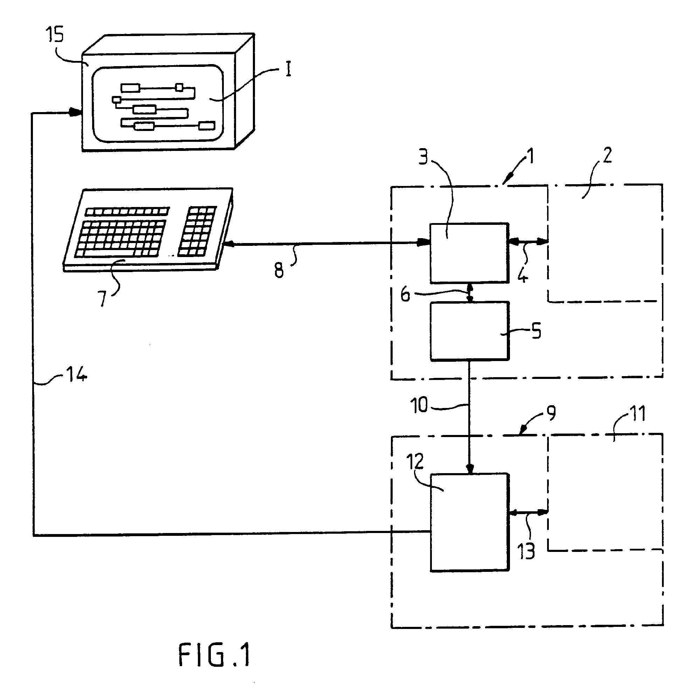

On se référera tout d'abord à la figure 1 illustrant, de façon très simplifiée, le système informatique, conforme à l'invention, pour reconstituer des parties déterminées du câblage électrique d'un aéronef par exemple.

Le système comprend une première unité 1 de traitement d'information comportant :
- des premiers moyens de mémoire 2, dans lesquels sont emmagasinées les informations relatives à l'ensemble de la structure du câblage électrique de l'aéronef ;
- des moyens de recherche 3, dans lesdits moyens de mémoire 2 auxquels ils sont liés par la liaison 4, des informations spécifiques à une partie déterminée du câblage ; et
- des moyens 5 pour élaborer, à partir desdites informations spécifiques, la structure logique de ladite partie déterminée du câblage, ces derniers étant reliés aux moyens de recherche 3 par une liaison 6. On obtient ainsi, à ce stade, une description logique (structure logique) des connexions entre les éléments à représenter sur le schéma, excluant toute information graphique.

Le système comprend de plus des moyens, tels qu'un clavier de commande 7, reliés, par la liaison 8, à la première unité de traitement d'information 1, pour l'introduction de données d'identification de ladite partie déterminée du câblage, dans les moyens de recherche 3.

Par ailleurs, on prévoit une seconde unité 9 de traitement d'information, reliée à la première unité 1 par la liaison 10, comportant :
- des seconds moyens de mémoire 11, dans lesquels sont emmagasinées les informations relatives à la représentation graphique des différents éléments du câblage ; et
- des moyens 12, reliés auxdits moyens d'élaboration 5 par la liaison 10 et auxdits seconds moyens de mémoire 11 par la liaison 13, pour générer, à partir de la structure logique de ladite partie déterminée du câblage, une image représentative de ladite partie du câblage, en fonction des informations contenues dans lesdits seconds moyens de mémoire 11.

Les moyens de création d'image 12 sont reliés, par la liaison 14, à un écran 15 sur lequel ladite image I est affichée.

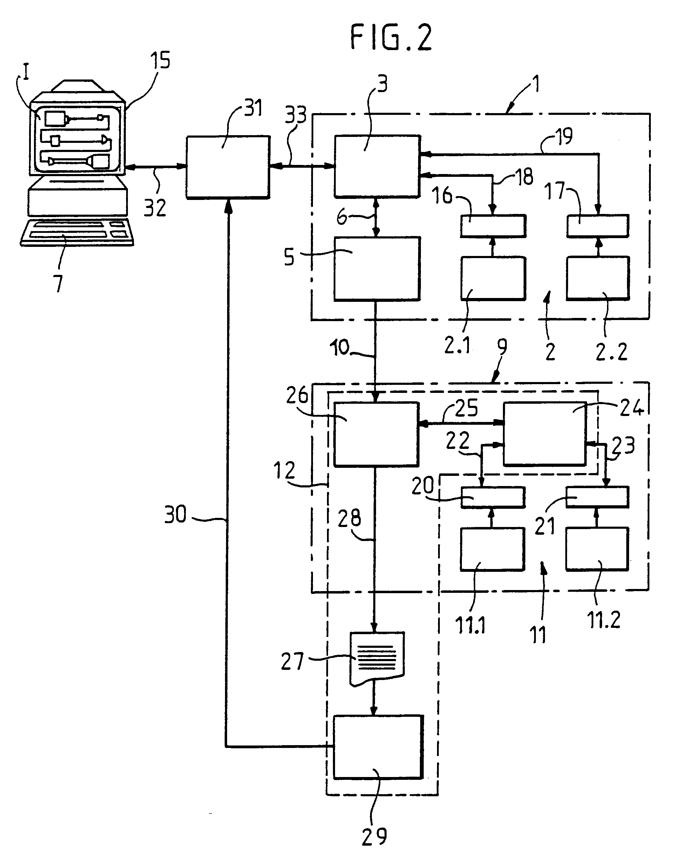

La figure 2 présente une réalisation préférée du système de l'invention.

En particulier, les premiers moyens de mémoire 2 comportent une première mémoire 2.1 dite de câblage et une deuxième mémoire 2.2 dite de connexions internes, chacune reliée par des interfaces 16, 17 et liaisons 18, 19 respectives aux moyens de recherche 3.

La mémoire de câblage 2.1 permet de retrouver les interconnexions entre les équipements et semi-équipements de l'aéronef, ainsi que leurs références. Il convient de noter que les semi-équipements sont définis comme des pièces, telles que des relais, des barrettes de raccordement ou des prises, se trouvant dans le câblage entre deux équipements de l'aéronef. La mémoire de câblage 2.1 contient la description du câblage électrique de l'aéronef, et elle est utilisée pour la recherche de tous les éléments intervenant dans le câblage entre deux équipements. Cette mémoire est créée à partir des listes de câbles mentionnées ci-dessus.

La mémoire de connexions internes 2.2 contient, pour chaque type de semi-équipement, les connexions internes entre les points de câblage. Ces informations permettent de "traverser" ces semi-équipements et de connaître ainsi le cheminement électrique complet entre deux équipements.

Par ailleurs, les seconds moyens de mémoire 11 comportent une troisième mémoire 11.1 dite de structure interne des semi-équipements et une quatrième mémoire 11.2 dite des symboles graphiques, chacune reliée par des interfaces 20,21 et liaisons 22,23 respectives aux moyens 12 de génération d'image.

La mémoire de structure interne des semi-équipements 11.1 contient les informations relatives à la structure interne de certains semi-équipements. Il existe, par exemple, plusieurs types de relais, et chacun est déterminé par sa référence de pièce (relais à retard à l'ouverture, relais à contact de type marteau ou interrupteur, notamment). Une représentation graphique différente est associée à chaque type de relais.

La mémoire des symboles graphiques 11.2 contient la symbolique adoptée pour la représentation graphique des éléments constituant les équipements et semi-équipements (connecteur, contact de type marteau, par exemple). Elle est utilisée pour engendrer la description graphique des composants.

Comme montré sur la figure 2, les moyens de génération d'image 12 comprennent des moyens de représentation graphique 24 des composants du schéma, en fonction des informations fournies par la première unité 1 de traitement d'information.

Chaque composant ou élément est alors défini par une description de sa représentation graphique en format normalisé, l'encombrement sur le schéma de cette représentation graphique et les points de connexion avec les autres composants.

Ces moyens 24 sont reliés, par une liaison 25, à des moyens 26 pour positionner les composants sur le schéma en fonction des règles d'agencement adoptées et y ajouter la description des câbles de connexion, de façon à ainsi obtenir un fichier descriptif du schéma 27 transmis, par la liaison 28, à un dispositif 29 qui analyse séquentiellement les instructions contenues dans ce fichier et produit une image I directement affichable sur l'écran 15. Le dispositif 29 est relié par la liaison 30 à une interface 31 assurant l'affichage du schéma sur l'écran et le "dialogue" entre l'opérateur et le système, et cela par l'intermédiaire des liaisons 32 et 33.

On décrira maintenant ci-après un exemple de processus de recherche et d'affichage.

Par l'intermédiaire du clavier de commande 7, l'opérateur entre une référence d'équipement. Après recherche dans la mémoire de câblage 2.1, le système affiche la liste des prises de cet équipement. L'opérateur choisit la prise qui l'intéresse. Après recherche dans la mémoire de câblage 2.1, le système affiche la liste des broches de la prise sélectionnée. L'opérateur choisit la broche qui l'intéresse, en définissant ainsi un début du câblage.

Il convient ensuite de rechercher les extrémités du câble sélectionné. En utilisant la mémoire de câblage 2.1, le système cherche les références de la fin du câble, qui peut être soit sur un équipement, soit sur un semi-équipement. Dans le premier cas, la recherche de l'extrémité du câble est terminée.

Dans le second cas, la recherche doit continuer jusqu'au premier équipement trouvé. Le système cherche dans la mémoire de câblage 2.1 la référence du semi-équipement. Cette référence permet de chercher, dans la mémoire de connexions internes 2.2, la structure interne de ce semi-équipement. Cette structure permet de connaître la ou les autres broches de ce semi-équipement qui sont matériellement ou fonctionnellement liées à l'entrée repérée. Par exemple, dans le cas d'un relais, en connaissant la borne d'entrée et sa référence, on peut connaître les bornes de sortie associées à cette entrée.

Le système parcourt ainsi de proche en proche le cheminement du câblage dans toutes les directions jusqu'à ce qu'il trouve un équipement à chaque extrémité. A cet instant, la liste de toutes les terminaisons d'un câble est disponible.

Le système affiche la liste des extrémités identifiées par l'exploration du câblage. L'identification se fait par le nom de l'équipement, sa référence, la référence de la prise ainsi que de la broche. L'opérateur choisit la terminaison pour laquelle il souhaite voir cette partie du câblage. Le système va alors chercher, dans les mémoires de câblage 2.1 et de connexions internes 2.2, les liens existant entre les éléments du schéma, ainsi que les caractéristiques de ces éléments, pour déterminer la structure logique de cette partie déterminée du câblage.

Il reste au système à créer une représentation graphique de cette partie de câblage, en cherchant, dans les mémoires 11.1 et 11.2 mentionnées ci-dessus, les différents symboles graphiques nécessaires. Puis, le système, grâce aux moyens de génération d'image 12 déjà décrits, va créer une image I du schéma affichable sur l'écran 15.

Le schéma étant présenté à l'écran, le système peut offrir à l'opérateur diverses fonctions, telles que la possibilité de sélection d'identité qui permet de visualiser un supplément d'information relatif à un élément affiché ou le lancement direct, à partir de l'écran, de recherches de câblage dans d'autres directions.

Ainsi, le système selon l'invention peut reconstituer de proche en proche le câblage entre deux équipements de l'aéronef, grâce à la connaissance de l'identité et des extrémités des câbles. Le système génère une représentation graphique qui est affichée sur un terminal de visualisation ou imprimée, à la demande, sur l'imprimante de bord. Cette représentation graphique utilise les mêmes symboles que ceux utilisés dans la représentation sur papier.

La production d'un schéma de câblage est réalisée en deux étapes, d'une part la conception du schéma qui aboutit à un descriptif complet, d'autre part la génération sur un écran ou une imprimante.

Ce découpage permet d'utiliser un matériel spécialisé pour chaque fonction, et améliore les performances du procédé, notamment en rapidité. Cela permet également de disposer des descriptifs normalisés des schémas et donc de les archiver informatiquement pour ensuite les réutiliser le cas échéant.

L'étape de conception du schéma est elle-même divisée en deux phases :
- extraire des premiers moyens de mémoire les informations intéressant la structure logique du schéma en fonction de la requête de l'utilisateur ;
- construire une représentation graphique de chaque élément de ladite structure, puis connecter ces éléments en fonction des contraintes de mise en page.

Le fichier descriptif du schéma qui est ainsi obtenu est ensuite traité pour obtenir une image qui pourra être affichée sur un écran, ou imprimée.

L'exploitation d'un fichier permet également l'implantation de fonctions qui sont pour le moins difficilement réalisables à partir d'un support en papier. Par exemple, il sera possible de suivre automatiquement un signal qui passe par de nombreuses prises ou bornes de raccordement. Cela est difficile sans le système de l'invention car, le schéma étant de taille limitée, le cheminement du signal occupe plusieurs planches graphiques. Au contraire, dans le cas présent, on pourra utiliser, grâce à un pointeur, la possibilité de déplacement du graphique sur l'écran.

## Revendications

1. Système informatique pour reconstituer le schéma d'au moins une partie du câblage électrique d'une installation, comprenant :
a) une première unité (1) de traitement d'information comportant :
. des premiers moyens de mémoire (2), dans lesquels sont emmagasinées des informations relatives à l'ensemble de la structure du câblage électrique de l'installation ; et
. des moyens de recherche (3), dans lesdits premiers moyens de mémoire (2), des informations spécifiques à une partie déterminée dudit câblage ;
b) des moyens (7), reliés à ladite première unité (1), pour l'introduction de données d'identification de ladite partie déterminée du câblage, dans lesdits moyens de recherche (3) ;
c) une seconde unité (9) de traitement d'information, reliée à ladite première unité (1), comportant :
. des seconds moyens de mémoire (11), dans lesquels sont emmagasinées des informations relatives à la représentation graphique des éléments du câblage ; et
. des moyens (12) pour engendrer, à partir d'une structure logique de ladite partie déterminée du câblage, une image (I) représentative de ladite partie du câblage en fonction des informations contenues dans lesdits seconds moyens de mémoire (11) ; et
d) des moyens d'affichage (15) de ladite image (I),
caractérisé en ce que :
- lesdits premiers moyens de mémoire (2) comportent une première mémoire (2.1) contenant la description de tous les éléments du câblage électrique de l'installation, et une deuxième mémoire (2.2) contenant les connexions internes propres à des éléments particuliers du câblage ;
- lesdits seconds moyens de mémoire (11) comportent une troisième mémoire (11.1) contenant les informations graphiques relatives à la structure interne d'éléments particuliers du câblage, et une quatrième mémoire (11.2) contenant les symboles graphiques propres aux différents éléments du câblage ; et
- ladite première unité (1) comporte des moyens (5) pour élaborer, à partir desdites informations spécifiques délivrées par lesdits moyens de recherche (3), la structure logique des connexions entre les éléments de ladite partie déterminée du câblage.

2. Système selon la revendication 1,
caractérisé en ce que les moyens de génération d'image (12) comprennent des moyens (24) de représentation graphique des éléments de ladite partie déterminée du câblage, reliés à des moyens (26) pour positionner lesdits éléments sur le schéma et y ajouter la description des câbles de connexion, pour fournir ainsi un fichier descriptif du schéma (27) qui est transmis à un dispositif (29) produisant, à partir des informations contenues dans le fichier (27), une image (I) directement affichable sur lesdits moyens d'affichage (15).

3. Système selon l'une des revendications 1 ou 2,
caractérisé en ce qu'il comprend une interface (31) entre, d'une part, lesdits moyens d'introduction de données (7) et ladite première unité (1) de traitement d'information, et, d'autre part, ladite seconde unité (9) de traitement d'information et lesdits moyens d'affichage (15).

4. Système selon l'une quelconque des revendications 1 à 3,
caractérisé en ce que lesdits moyens d'introduction de données sont constitués par un clavier de commande (7).

5. Système selon l'une quelconque des revendications 1 à 4,
caractérisé en ce que lesdits moyens d'affichage sont constitués par un écran de visualisation (15) et/ou une imprimante.

## Patentansprüche

1. Informationsverarbeitungssystem zur Wiederherstellung des Plans zumindest eines Teils der elektrischen Verkabelung einer Anlage, mit:
a) einer ersten Informationsverarbeitungseinheit (1) mit:
. ersten Speichermitteln (2), in denen Informationen über die gesamte Struktur der elektrischen Verkabelung der Anlage gespeichert sind, und
. Mitteln (3), um in den ersten Speichermitteln (2) für einen bestimmten Teil der Verkabelung spezifische Informationen suchen zu können;
b) Mitteln (7), die mit der ersten Einheit (1) verbunden sind, zur Eingabe von Identifikationsdaten des bestimmten Teils der Verkabelung in die Suchmittel (3);
c) einer zweiten Informationsverarbeitungseinheit (9), die mit der ersten Einheit (1) verbunden ist, mit:
. zweiten Speichermitteln (11), in denen Informationen für die grafische Darstellung der Verkabelungselemente gespeichert sind,
und
. Mitteln (12), um aus einer logischen Struktur des bestimmten Teils der Verkabelung in Abhängigkeit von den in den zweiten Speichermitteln (11) enthaltenen Informationen ein für den Teil der Verkabelung repräsentatives Bild (I) zu erzeugen, und
d) Anzeigemitteln (15) des Bildes (I),
dadurch gekennzeichnet, daß:
- die ersten Speichermittel (2) einen ersten Speicher (2.1) mit der Beschreibung aller Elemente der elektrischen Verkabelung der Anlage und einen zweiten Speicher (2.2) mit den Innenverbindungen für spezielle Elemente der Verkabelung haben;
- die zweiten Speichermittel (11) einen dritten Speicher (11.1) mit den grafischen Informationen für die interne Struktur spezieller Elemente der Verkabelung und einen vierten Speicher (11.2) mit den grafischen Symbolen für die verschiedenen Teile der Verkabelung haben und
- die erste Einheit (1) Mittel (5) hat, um aus den spezifischen Informationen der Suchmittel (3) die logische Struktur der Verbindungen zwischen den Elementen des bestimmten Verkabelungsteils zu erstellen.

2. System nach Anspruch 1,
dadurch gekennzeichnet, daß die bilderzeugenden Mittel (12) Mittel (24) zur grafischen Darstellung der Bauteile des bestimmten Teils der Verkabelung haben, die mit Mitteln (26) verbunden sind, um die Elemente auf dem Plan positionieren und die Beschreibung der Verbindungskabel ergänzen zu können und so seine Planbeschreibungsdatei (27) zu erhalten, die an eine Vorrichtung (29) übertragen wird, die aus den in der Datei (27) enthaltenen Informationen ein direkt auf den Anzeigemitteln (15) anzeigbares Bild (I) erzeugt.

3. System nach einem der Ansprüche 1 oder 2,
dadurch gekennzeichnet, daß es eine Schnittstelle (31) einerseits zwischen den Dateneingabemitteln (7) und der ersten Informationsverarbeitungseinheit (1) und andererseits zwischen der zweiten Informationsverarbeitungseinheit (9) und den Anzeigemitteln (15) hat.

4. System nach einem der Ansprüche 1 bis 3,
dadurch gekennzeichnet, daß die Dateneingabemittel aus einer Bedientastatur (7) bestehen.

5. System nach einem der Ansprüche 1 bis 4,
dadurch gekennzeichnet, daß die Anzeigemittel aus einem Bildschirm (15) und/oder einem Drucker bestehen.

## Claims

1. A data processing system for reconstructing the diagram of at least part of the electric cabling of an installation, comprising:
a) a first data processing unit (1) including:
first memory means (2) in which data is stored relating to the design of the electric cabling structure of the installation; and
means (3) for searching in the said first memory means (2) for specific data for a defined part of the said cabling;
b) means (7) connected to the said first unit (1) for entering data in the said searching means (3) to identify the said defined part of the cabling;
c) a second data processing unit (9) connected to the said first unit (1) and including:
second memory means (11) in which data is stored relating to the graphical representation of cabling components; and
means (12) for creating an image (I) representing the said defined part of the cabling from a logical design of the said defined part, in accordance with data contained in the said second memory means (11); and
d) means (15) for displaying the said image (I),
characterized in that:
. the first memory means (2) include a first memory (2.1) containing the description of all the components of the electric cabling of the installation and a second memory (2.2) containing the internal connections pertaining to particular components of the cabling;
. the said second memory means (11) include a third memory (11.1) containing graphical information relating to the internal structure of particular components of the cabling and a fourth memory (11.2) containing the graphical symbols pertaining to the various components of the cabling; and
. the said first unit (1) includes means (5) for creating the logical design of connections between the components of the said defined part of the cabling on the basis of the said specific data provided by the said searching means (3).

2. A system according to claim 1, characterized in that the means (12) for creating an image comprise means (24) for representing graphically components of the said defined part of the cabling, connected to means (26) for positioning the said components on the diagram and adding to them the description of the connecting cables, so as to provide a descriptive file (27) of the diagram which is transmitted to a device (29) producing from the data contained in the file (27) an image (I) which can be displayed on the said display means (15).

3. A system according to claim 1 or 2, characterized in that it comprises an interface (31) between the said means (7) for entering data and the said first data processing unit (1) and also between the said second data processing unit (9) and the said display means (15).

4. A system according to any one of claims 1 to 3, characterized in that the said means for entering data are a control keyboard (7).

5. A system according to any one of claims 1 to 4, characterized in that the said display means are a VDU (15) and/or a printer.
